# EUROPÄISCHE PATENTANMELDUNG

(11) **EP 3 409 650 A1**
(43) Veröffentlichungstag der Anmeldung: **05.12.2018**
(21) Anmeldenummer: 18161308.4
(22) Anmeldetag: 12.03.2018
(51) Int. Cl.: C04B 35/14, B28B 1/28, C04B 35/18

(54) **VERFAHREN ZUR HERSTELLUNG EINES SANITÄRKERAMISCHEN GUSSTEILS**

(30) Priorität: 29.05.2017 DE 102017111631
(71) Anmelder: Duravit Aktiengesellschaft, 78132 Hornberg (DE)
(72) Erfinder: GILLES, Christian, 77652 Offenburg (DE); STAMMEL, Thomas, 78132 Hornberg (DE)
(74) Vertreter: Lindner Blaumeier Patent- und Rechtsanwälte

(57) **Zusammenfassung**

Verfahren zur Herstellung eines sanitärkeramischen Gussteils, bei dem ein keramischer Schlicker in eine Gießform gegossen wird, in der sich aus dem Schlicker das Gussteil bildet, wobei die Gießform (1) zumindest während eines Teils der Eingießdauer um eine Achse (3) rotiert.

## Beschreibung

Die Erfindung betrifft ein Verfahren zur Herstellung eines sanitärkeramischen Gussteils, bei dem ein keramischer Schlicker in eine Gießform gegossen wird, in der sich aus dem Schlicker das Gussteil bildet.

Sanitärkeramische Artikel weisen häufig eine relativ komplexe Geometrie auf, zu nennen sind beispielsweise Waschbecken, WCs, Duschtassen und Ähnliches. Zur Herstellung eines solchen Keramikbauteils wird zunächst ein Gussteil gegossen, wozu ein keramischer Schlicker hergestellt wird, der sodann in eine die Geometrie des herzustellenden Keramikkörpers abbildende Gießform gegossen wird. Bei einer solchen Gießform kann es sich um eine Gipsform oder um eine Druckgussform handeln. In der Gießform bildet sich sodann das Gussteil, üblicherweise auch Scherben genannt, aus. Nach Öffnen der Gießform wird das Gussteil gebrannt, um den Keramikkörper herzustellen.

Zunehmend werden Sanitärkeramikartikel mit möglichst dünner Wandung hergestellt, was sie sehr leicht und filigran aussehen lässt und die Ausbildung sehr enger Radien an Biegungen oder Rundungen ermöglicht. Hierzu wird üblicherweise eine hochfeste Masse, die eine Weiterentwicklung früher verwendeter Feinfeuerton-Massen darstellt, verwendet. Diese hochfeste Masse, üblicherweise HF-Masse genannt, ist, verglichen zur herkömmlichen Vitreous-China-Masse, im gebrannten Zustand poröser und bildet einen geringeren Glasphasenanteil aus. Dies ermöglicht es, eine sich beim späteren Brand einstellende Schwindung und eine etwaige Deformation besser vorhersehen zu können und entsprechend bei der Auslegung der Gussteilgeometrie von Haus aus gegenmodellieren zu können. Denn beim Brand stellt sich eine entsprechende Schwindung und gegebenenfalls Deformation in einem beachtlichen Umfang ein, resultierend aus dem beim Brennen hervorgerufenen Feuchtigkeitsverlust sowie den sich beim Brennen einstellenden physikalischen und chemischen Vorgängen, die zur Ausbildung und Kompaktierung des Keramikmaterials führen.

Die Verwendung dieser speziellen hochfesten Massen ermöglicht aufgrund der besseren Vorhersehbarkeit die Herstellung der dünnwandigen Keramikgegenstände, im Gegensatz zu der Herstellung solcher dünnwandigen Gegenstände aus Vitreous-China -Massen. Denn diese enthalten einen hohen Anteil an Tonteilchen, die eine plättchenförmige, anisotrope Struktur aufweisen. Beim Eingießen des Vitreous-China-Schlickers in die Gießform lagern sich diese plättchenförmigen Tonteilchen in Schichten übereinander. In Bereichen, in denen in der Gießformkavität entweder Engstellen oder Knicke respektive Kanten, Bögen und Ähnliches vorgesehen sind, stellen sich darüber hinaus unkontrollierbare, zufällige Verteilungen der plättchenförmigen, anisotropen Tonteilchen ein. Durch diesen Schichtaufbau sowie die lokal unregelmäßige, unkontrollierbare Teilchenverteilung kommt es dazu, dass, wenn beim Brennen die Schwindung einsetzt, aufgrund der prozentualen Schwindung jedes Tonteilchens die absolute Schwindung nicht in allen Richtungen gleich ist. Dies führt entsprechend zu Deformationen und Schwindungsunterschieden im gebrannten Teil selbst, die während des Brandes entstehen.

Hinzu kommt, dass sich beim Eingießen des Schlickers in die Gießform die Tonteilchen auch entsprechend der Strömung ausrichten. Diese Strömungen und damit auch die Ausrichtung sind von mehreren Parametern beeinflusst, z. B. der Eingießgeschwindigkeit, der Viskosität, der Dichte und der Temperatur des Schlickers wie auch natürlich der Geometrie des Gießlings in Bezug auf die Strömungswege innerhalb der Gießformkavität. Das heißt, dass sich auch strömungsbedingt nicht vorhersagbare Teilchenverteilungen einstellen, die einen beachtlichen Einfluss auf das Schwindungs- und Deformationsverhalten während des Brandes haben.

Aus diesem Grund ist bei Verwendung von Vitreous-China-Massen im Rahmen der Herstellung von insbesondere dünnwandigen Sanitärkeramikartikeln eine einigermaßen verlässliche Vorhersage des Schwindungs- und Deformationsverhaltens über mehrere Artikel hinweg nicht möglich, weshalb auch eine gießformtechnische Gegenmodellierung nicht möglich ist. Zwar versucht man, durch Hin- und Herschwenken der Gießform nach dem Eingießen des Schlickers aufgrund der Formbewegung einerseits ein vollständiges Ausfüllen der Formkavität sicherzustellen, und andererseits eine gewisse Reproduzierbarkeit zu erreichen, gleichwohl gelingt dies nicht in zufriedenstellendem Maß.

Der Erfindung liegt damit das Problem zugrunde, ein demgegenüber verbessertes Verfahren anzugeben.

Zur Lösung dieses Problems ist bei einem Verfahren der eingangs genannten Art erfindungsgemäß vorgesehen, dass die Gießform zumindest während eines Teils der Eingießdauer um eine Achse rotiert.

Das erfindungsgemäße Verfahren sieht vor, die Gießform aktiv um eine Achse zu drehen, wenn der Schlicker eingegossen wird. Die Drehung erfolgt zumindest während eines Teils der Eingießdauer, bevorzugt während der gesamten Eingießdauer. Dem liegt die Erkenntnis zugrunde, dass es möglich ist, durch die Rotation die Ausrichtung der Tonteilchen während des Gießvorgangs aktiv zu beeinflussen und über viele Gießvorgänge hinweg reproduzierbar zu kontrollieren. Durch die Rotation wirkt eine eine definierte Richtung aufweisende Zentrifugalkraft auf die Tonteilchen, die dazu führt, dass sich die Tonteilchen, der Zentrifugalkraft folgend, ausrichten bzw. durch Interaktion der Zentrifugalkraft mit anderen, die Ausrichtung beeinflussenden Parametern entsprechend kontrolliert ausrichten. Nachdem die Gießform für jeden Gießvorgang in gleicher Weise in die entsprechende Rotationseinrichtung eingespannt wird, und nachdem die sonstigen Gießparameter wie Viskosität, Temperatur, Gießdruck etc., aber auch die Rotationsparameter von Guss zu Guss gleich sind, ist es hierdurch möglich, reproduzierbare Teilchenverteilungen innerhalb des gesamten Gussteils zu erzeugen. Da die Teilchenverteilungen von Gussteil zu Gussteil reproduzierbar respektive vergleichbar sind, stellt sich folglich auch bei jedem einzelnen Brand ein weitestgehend gleiches Schwindungs- und Deformationsverhalten ein. Da dieses Schwindungs- und Deformationsverhalten demzufolge bekannt und reproduzierbar ist, kann durch entsprechende geometrische Auslegung der Gießformkavität und damit der Geometrie des Gussteils die Schwindung respektive Deformation beim Brand gegenmodelliert, also ihr entgegengewirkt werden.

Das erfindungsgemäße Verfahren ermöglicht es also, dass auch zur Herstellung dünnwandiger Sanitärkeramiken mit Wandstärken von zum Teil nur 2-3 mm und Geometrien mit sehr engen Radien von 1 - 2 mm damit auch aus Vitreous-China-Massen herstellbar sind, was aus den eingangs genannten Gründen bisher nicht möglich war. Da Sanitärkeramikartikel aus Vitreous-China einerseits, verglichen mit Sanitärartikeln aus einer hochfesten Masse, eine höhere Biegebruchfestigkeit aufweisen (Vitreous-China-Artikel ca. 70N/mm², hochfeste-Masse-Artikel ca. 45N/mm²), und noch dazu, was die Vitreous-China-Masse angeht, deutlich günstiger sind, erlaubt das erfindungsgemäße Verfahren die Herstellung von hervorragende mechanische Eigenschaften aufweisenden, gleichwohl aber sehr leicht und dünnwandig konfigurierten, optisch sehr ansprechenden sanitärkeramischen Artikeln.

Eine Gießform weist üblicherweise eine quaderförmige, längliche Geometrie auf. Sie wird beispielsweise horizontal angeordnet und um eine horizontale Drehachse gedreht. Es ist denkbar, dass die Gießform in dieser Ausrichtung um die horizontale Drehachse rotiert. Gleichermaßen ist es aber auch denkbar, dass die Gießform und die Drehachse unter einem Winkel zur Horizontalen positioniert werden, mithin also unter einem entsprechenden Anstellwinkel, der während des gesamten Eingießvorgangs beibehalten wird, rotiert. Zu diesem Zweck ist es denkbar, dass die Gießform zusätzlich um wenigstens eine weitere Achse geschwenkt wird. Diese Schwenkachse steht bevorzugt senkrecht zur Drehachse und verläuft bevorzugt ebenfalls horizontal.

Dabei ist es, wenn diese Schwenkmöglichkeit vorgesehen wird, möglich, dass die Verschwenkung der Gießform vor Beginn der Drehbewegung erfolgt und der Schwenkwinkel während der Drehbewegung beibehalten wird. Das heißt, dass das Anstellen der Rotationsachse einmalig vorgenommen wird und während des gesamten Rotationsvorgangs beibehalten wird. Alternativ ist es denkbar, dass die Gießform in einer überlagerten Bewegung simultan gedreht und geschwenkt wird.

Es ist also denkbar, beispielsweise nach Beginn der Rotationsbewegung in einem bestimmten Zeitmuster die Drehachse beispielsweise aus der Horizontalen herauszudrehen, bis in eine entsprechende Endposition, die dann entweder für die Fortsetzung des Rotationsprozesses beibehalten wird, oder die erst am Ende des Rotationsprozesses eingenommen wird. Auch durch diese überlagerte Schwenkbewegung kann ein reproduzierbarer, unter Umständen je nach Gussteilgeometrie zweckmäßiger Einfluss auf die Teilchenausrichtung vorgenommen werden.

Alternativ zu der einmaligen Anstellung respektive Verschwenkung der Rotationsachse ist es denkbar, die Gießform reziprok zu verschwenken, das heißt, dass die Gießform kontinuierlich oder intermittierend hin- und hergeschwenkt wird. In diesem Fall kommt es quasi zu einer taumelnden Drehbewegung aufgrund der überlagerten Schwenkbewegung.

Eine solche Verschwenkung oder Bewegungsüberlagerung, sei es dass die Verschwenkung nur einmalig erfolgt entweder vor Beginn oder während des Eingießens, oder permanent, kann vorrichtungsseitig ohne Weiteres dadurch realisiert werden, dass die Gießform zum einen in einer die eigentliche Rotation erwirkenden Aufnahme eingesetzt wird, wobei diese Aufnahme wiederum in einer zweiten Aufnahme angeordnet wird, die die gesamte Anordnung sodann entsprechend um die bevorzugt horizontal verlaufende weitere Schwenkachse verschwenkt.

Kommt eine solche reziproke Schwenkbewegung zum Einsatz, so kann diese Schwenkbewegung beispielsweise 2-20 Mal pro Minute von der einen Endlage in die andere Endlage erfolgen. Das heißt, dass die Schwenkgeschwindigkeit in einem entsprechenden Intervall je nach Anforderung gewählt und eingestellt werden kann, wie sie natürlich auch im Rahmen des gesamten Schwenkvorgangs variiert werden kann, beispielsweise von zunächst langsam bis schnell oder umgekehrt.

Der Schwenkwinkel sollte zwischen ±10°-75°, insbesondere zwischen ±15°-45° und vorzugsweise ±20° betragen, ausgehend von einer z. B. horizontalen Grundanordnung der Gießform. Der Schwenkwinkel richtet sich je nach Auslegung der Formhalterung und der entsprechend vorgesehenen Schwenkmechanik seitens der Gießmaschine.

Die Drehgeschwindigkeit sollte zwischen 5-30 U/min, insbesondere zwischen 10-25 U/min betragen. Sie sollte nicht zu niedrig sein, da sich ansonsten keine hinreichend hohen Zentrifugalkräfte ausbilden, die der hierdurch erfindungsgemäß erwirkten Ausrichtung der plättchenförmigen Tonteilchen dient. Sie sollte aber auch nicht zu hoch sein, um zu vermeiden, dass die Tonteilchen wandern und sich insbesondere im Bereich der Außenseite des Gussteils ansammeln.

Als Gießform kann wie beschrieben eine Gipsform verwendet werden, alternativ ist auch eine Druckgussform verwendbar. In der Gipsform erfolgt ein statischer Guss, während in der Druckgussform entweder ein statischer Guss oder ein Guss mit leichtem Überdruck erfolgen kann.

Ein bevorzugt verwendbarer Schlicker enthält neben Wasser in Gew%:

| | |
|---|---|
| SiO₂ | 55 - 65 |
| Al₂O₃ | 20 - 34 |
| Flussmittel | 4,5 - 6,5 |
| Färbende(s) Oxid(e) | 0,7 - 1,8 |

sowie einen Rest an Verunreinigungen oder Zuschlägen bis maximal 5 Gew%, wobei die Summe der verwendeten Komponenten (ohne Wasser) natürlich stets 100 Gew% ergibt.

Als Flussmittel können beispielsweise Ca- oder Mg-Verbindungen verwendet werden, als färbende Oxide können Oxide aus Fe, Ti oder Cu eingesetzt werden, als sonstige Zuschläge können beispielsweise ZrO₂, ZnO, Chromoxidverbindungen oder Ähnliches verwendet werden. Die Aufzählung ist nicht abschließend und keinesfalls beschränkend.

Neben dem Verfahren selbst betrifft die Erfindung ferner ein sanitärkeramisches Gussteil, hergestellt nach dem Verfahren nach einem der vorangehenden Ansprüche.

Des Weiteren betrifft die Erfindung ferner einen sanitärkeramischen Artikel, hergestellt durch Brennen eines solchen erfindungsgemäß hergestellten sanitärkeramischen Gussteils.

Weitere Vorteile und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung einer in einer Gießeinrichtung mit kombinierter Rotations- und Schwenkmechanik aufgenommenen Gießform in horizontaler, unverschwenkter Ausrichtung,
- Fig. 2: die Gießform aus Fig. 1 in verschwenkter Stellung,
- Fig. 3: die Gießform aus Fig. 1 bei reziproker Änderung der Schwenkwinkel,
- Fig. 4: eine Prinzipdarstellung einer Gießform, die auf einem Kugelkopf der Gießeinrichtung rotierbar und verschwenkbar angeordnet ist, und
- Fig. 5: die Gießform aus Fig. 4 in einer Schwenkposition.

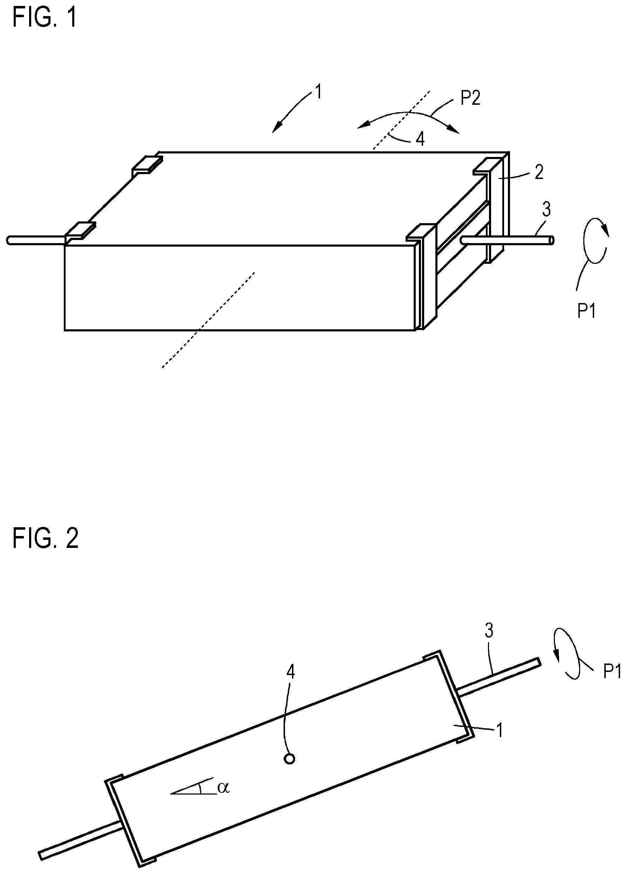

Fig. 1 zeigt eine Prinzipdarstellung einer Gießform 1, die hier der Einfachheit halber als einfacher Quader dargestellt ist. Sie besteht bekanntlich aus zwei oder mehr Formteilen, die in ihrem Inneren eine Kavität begrenzen, die die Form des herzustellenden Gussteils definiert. In dieser Gießform ist über eine nicht näher gezeigte Zuführeinrichtung, beispielsweise über eine der nachfolgend noch zu beschreibenden Drehachsen, ein wässriger Schlicker enthaltend die keramische Masse, beispielsweise Vitreous-China-Masse, zuführbar, um die Kavität vollständig auszufüllen.

Die Gießform 1 ist in einer Formhalterung 2 aufgenommen, die um eine Drehachse 3 kontinuierlich um 360° drehbar ist, wie durch den Pfeil P1 dargestellt, Das heißt, dass die Form um ihre Längsachse gedreht werden kann. Diese Drehung erfolgt, während der Schlicker in die Gießform eingefüllt wird, wobei die Rotation entweder nur während eines Teils der Einfülldauer vonstatten geht, oder sich bevorzugt über die gesamte Einfülldauer erstreckt. Aufgrund der Rotation werden Fliehkräfte erzeugt, die auf die plättchenförmigen Tonpartikel oder sonstigen Partikel, die im Schlicker enthalten sind, wirken und zu einer Ausrichtung derselben führen, wobei diese Ausrichtung bei Verwendung gleicher Schlicker-, Gieß- und Rotationsparameter von Guss zu Guss reproduzierbar ist.

Wie in Fig. 1 ferner dargestellt, besteht des Weiteren die Möglichkeit, die Gießform 1 zusätzlich um eine zweite, hier nur gestrichelt gezeigte Achse 4 zu verschwenken, wie durch den Pfeil P2 dargestellt ist. Diese weitere Achse 4 verläuft ebenfalls horizontal, steht jedoch senkrecht zur Achse 3. Das heißt, dass durch diese Verschwenkung die räumliche Ausrichtung der Rotationsachse 3 verändert werden kann.

Diese Verschwenkung kann einmalig erfolgen, dann bevorzugt vor Beginn des Eingießens, wobei der Schwenkwinkel während der nachfolgenden Rotation während des Eingießens beibehalten bleibt, das heißt, dass die Gießform 1 dann unter einem fest eingestellten Winkel relativ zur Horizontalen rotiert.

Es ist aber auch denkbar, dass die Verschwenkung während des Eingießvorgangs erfolgt. Denkbar ist es, die Verschwenkung beispielsweise einmalig aus der Horizontalen heraus in die entsprechende Endlage vorzunehmen und parallel hierzu permanent zu rotieren, das heißt, dass sich die beiden Bewegungen überlagern. Alternativ ist es denkbar, ein kontinuierliches Hin- und Herschwenken zu realisieren, mithin also die Gießform 1 kontinuierlich von links nach rechts und zurück zu schwenken. Je nach Schwenkvorgang kann eine entsprechende Beeinflussung der Teilchenausrichtung aufgrund einer Variation der Richtung der Zentrifugalkraft auf die Teilchen erwirkt werden.

Fig. 1 zeigt ein Beispiel, bei dem die Gießform 1 um die weitere Achse 4 verschwenkt wurde, wobei diese Verschwenkung um den Winkel α permanent während der Rotation, wie durch den Pfeil P1 dargestellt, beibehalten wird.

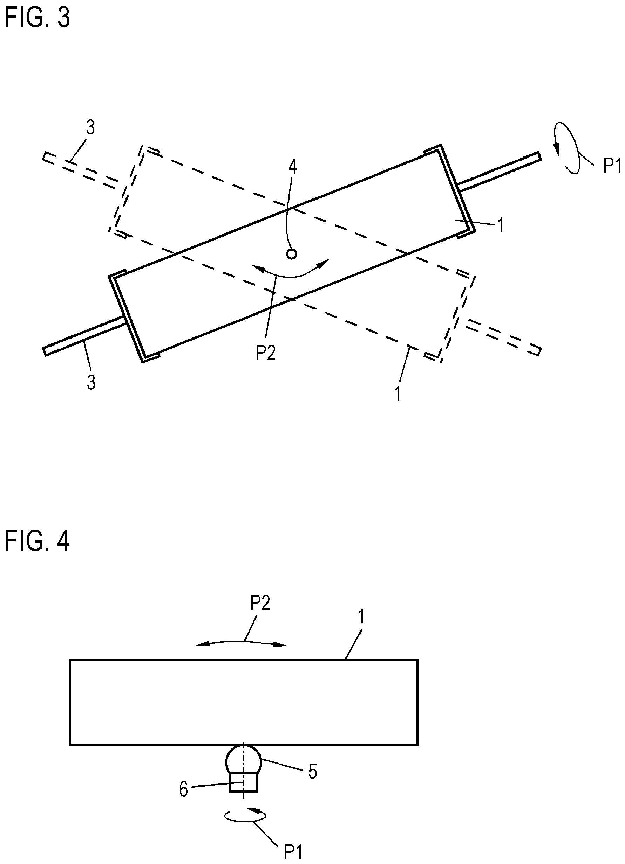

Demgegenüber zeigt Fig. 3 eine Ansicht, bei der die Gießform 1 permanent hin- und hergeschwenkt wird, wie durch den Doppelpfeil P2 dargestellt ist, wobei die eine Endlage ausgezogen und die andere Endlage gestrichelt dargestellt ist.

Während die Rotationsgeschwindigkeit zwischen 5-30 U/min, vorzugsweise zwischen 10-25 U/min beträgt und beispielsweise in Abhängigkeit der Geometrie des Gussteils, der Viskosität und Temperatur des Schlickers etc. gewählt wird, kann die Schwenkgeschwindigkeit zwischen 2-20 Schwenkbewegungen pro Minute von einer Endlage in die andere gewählt werden, wobei auch hier die Schwenkgeschwindigkeit in Abhängigkeit der entsprechenden Parameter, wie Gussteilgeometrie und den physikalischen Eigenschaften des Schlickers etc. gewählt wird.

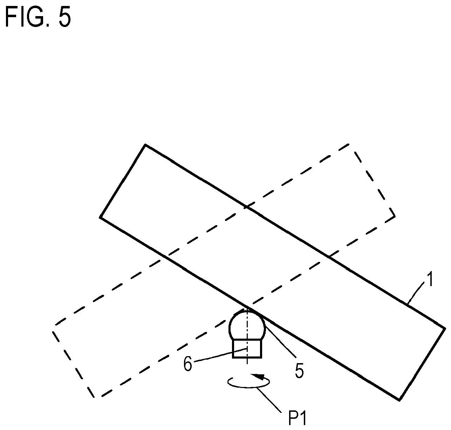

Fig. 4 zeigt eine Ausgestaltung, bei der die Gießform 1 auf einen Kugelkopf 5 der Gießmaschine respektive der Bewegungsmechanik gelagert ist. Sie ist über eine nicht näher gezeigte Halterung in dieser Position fixiert und kann mittels einer Rotationseinrichtung um die Vertikalachse 6 des Kugelkopfes 5 um 360° rotiert werden, wie durch den Pfeil P1 dargestellt ist. Auch hier ist also eine Rotation der horizontal positionierten Gießform möglich, in diesem Fall jedoch um eine Vertikalachse. Zusätzlich, auch gegebenenfalls überlagert, kann auch hier eine Verschwenkung um den Kugelkopf 5, also die Kugelauflage erfolgen, um die Gießform 1 definiert zu verkippen. Die Verschwenkbarkeit um den Kugelkopf 5 ist in Fig. 4 durch den Pfeil P2 dargestellt. Diese Situation ist in Fig. 5 dargestellt, bei der wiederum die Gießform 1 gezeigt ist, die auf dem Kugelkopf 5 aufgenommen ist und die um die Drehachse 6 rotiert. Sie ist gleichzeitig, wie Fig. 5 zeigt, um den Kugelkopf 5 verschwenkt. Diese Schwenkverstellung kann beibehalten werden, wie in Fig. 5 gezeigt, das heißt, dass sie in dieser Form quasi als Rotationshyperboloid rotiert.

Alternativ zur Einstellung eines festen Schwenkwinkels ist aber auch hier denkbar, diesen kontinuierlich zu ändern, so dass auch bei einer solchen Gießformlagerung eine Taumelbewegung realisiert werden kann.

Die Verschwenkung, unabhängig davon, ob nun die Gießform auf eine um definierte Achsen wie im Bauteil gemäß der Fig. 2 und 3 schwenkbar ist oder auf einem Kugelkopf gelagert ist, kann im Bereich zwischen ±10°-75° erfolgen, je nach Auslegung der Bewegungs- oder Schwenkmechanik. Der Schwenkzyklus beim kontinuierlichen oder intermittierenden Hin- und Herschwenken sollte 2-20 Schwenkbewegungen pro Minute von der einen Endlage in die andere Endlage betragen.

Festzuhalten ist, dass die Rotation oder die überlagerte Bewegung der Gießform mit dem Ende des Eingießens nicht enden muss. Vielmehr kann diese Bewegung fortgesetzt werden, also auch zumindest während eines Teils der Dauer der Scheiben- bzw. Gussteilbildung, gegebenenfalls bis zu deren Ende.

Nach Beendigung des Gusses wird die Gießform der Gießvorrichtung respektive der Bewegungsmechanik entnommen und geöffnet und das Gussteil entnommen. Dieses wird sodann einem Ofen zugeführt, in dem es entsprechend gebrannt wird, wodurch der Sanitärartikel hergestellt wird. Eine bei diesem Brand einsetzende Schwindung oder Deformation wurde durch die originäre Formgebung des Gussteils bereits gegenmodelliert, so dass sich durch diese Schwindung und Deformation insgesamt die gewünschte Endgeometrie des Sanitärartikels einstellt.

Die Herstellung desselben, also des Gussteils sowie des Sanitärartikels, ist, auch bei sehr dünner Wandstärke und extrem engen Radien, mit einer Vitreous-China-Masse möglich, da aufgrund des erfindungsgemäßen Verfahrens, insbesondere des Rotierens der Gießform, eine vorteilhafte Beeinflussung der Ausrichtung der plättchenförmigen Schlickerbestandteile erreichen lässt, so dass reproduzierbare Verteilungen von Gussteil zu Gussteil erreicht werden können, so dass also eine etwaige brandbedingte Schwindung oder Deformation reproduzierbar vorherbestimmbar ist und dementsprechend bei der geometrischen Auslegung des Gussteils bereits berücksichtigt werden kann.

## Patentansprüche

1. Verfahren zur Herstellung eines sanitärkeramischen Gussteils, bei dem ein keramischer Schlicker in eine Gießform gegossen wird, in der sich aus dem Schlicker das Gussteil bildet, **dadurch gekennzeichnet, dass** die Gießform (1) zumindest während eines Teils der Eingießdauer um eine Achse (3) rotiert.

2. Verfahren nach Anspruch 1, **dadurch gekennzeichnet, dass** die Gießform (1) während der gesamten Eingießdauer rotiert.

3. Verfahren nach Anspruch 1 oder 2, **dadurch gekennzeichnet, dass** die Gießform (3) zusätzlich um wenigstens weitere eine Achse (4) geschwenkt wird.

4. Verfahren nach Anspruch 3, **dadurch gekennzeichnet, dass** die Schwenkachse (4) senkrecht zur Drehachse (3) steht.

5. Verfahren nach Anspruch 3 oder 4, **dadurch gekennzeichnet, dass** die Verschwenkung der Gießform (1) vor dem Beginn der Drehbewegung erfolgt und der Schwenkwinkel während der Drehbewegung beibehalten wird.

6. Verfahren nach Anspruch 3 oder 4, **dadurch gekennzeichnet, dass** die Gießform (1) in einer überlagerten Bewegung simultan gedreht und geschwenkt wird.

7. Verfahren nach Anspruch 6, **dadurch gekennzeichnet, dass** die Gießform (1) reziprok geschwenkt wird.

8. Verfahren nach Anspruch 7, **dadurch gekennzeichnet, dass** die reziproke Schwenkbewegung 2-20 Mal pro Minute von der einen Endlage in die andere Endlage erfolgt.

9. Verfahren nach einem der Ansprüche 5 bis 8, **dadurch gekennzeichnet, dass** der Schwenkwinkel zwischen ±10°-75°, insbesondere zwischen ±15°-45° und vorzugsweise ±20° beträgt.

10. Verfahren nach einem der vorangehenden Ansprüche, **dadurch gekennzeichnet, dass** die Drehgeschwindigkeit zwischen 5-30 U/min. insbesondere zwischen 10-25 U/min beträgt.

11. Verfahren nach einem der vorangehenden Ansprüche, **dadurch gekennzeichnet, dass** als Gießform (1) eine Gipsform oder eine Druckgussform verwendet wird.

12. Verfahren nach einem der vorangehenden Ansprüche, **dadurch gekennzeichnet, dass** der Schlicker neben Wasser enthält (in Gew%):
| | |
|---|---|
| SiO₂ | 55 - 65 |
| Al₂O₃ | 20 - 34 |
| Flussmittel | 4,5 - 6,5 |
| Färbende(s) Oxid(e) | 0,7 - 1,8 |
sowie einen Rest an Verunreinigungen oder Zuschlägen.

13. Sanitärkeramisches Gussteil, hergestellt nach dem Verfahren nach einem der vorangehenden Ansprüche.

14. Sanitärkeramischer Artikel, hergestellt durch Brennen eines sanitärkeramischen Gussteils nach Anspruch 13.
